# EUROPÄISCHE PATENTSCHRIFT

(11) **EP 0 898 790 B1**
(45) Veröffentlichungstag und Bekanntmachung des Hinweises auf die Patenterteilung: **17.10.2001**
(21) Anmeldenummer: 97922887.1
(22) Anmeldetag: 28.04.1997
(51) Int. Cl.: H01M 8/04

(54) **VERFAHREN ZUM BETREIBEN EINER HOCHTEMPERATUR-BRENNSTOFFZELLENANLAGE UND HOCHTEMPERATUR-BRENNSTOFFZELLENANLAGE**
HIGH-TEMPERATURE FUEL CELL PLANT AND PROCESS FOR OPERATING THE SAME
INSTALLATION A PILE A COMBUSTIBLE HAUTE TEMPERATURE ET PROCEDE DE FONCTIONNEMENT DE LADITE INSTALLATION

(30) Priorität: 07.05.1996 DE 19618331
(43) Veröffentlichungstag der Anmeldung: 03.03.1999
(73) Patentinhaber: SIEMENS AKTIENGESELLSCHAFT, 80333 München (DE)
(72) Erfinder: STOCK, Andreas, D-63639 Flörsbachtal (DE)
(86) Internationale Anmeldenummer: DE9700868
(87) Internationale Veröffentlichungsnummer: WO9742673

(56) Entgegenhaltungen:
- EP-A- 0 246 649
- EP-A- 0 400 701
- US-A- 5 413 879
- PATENT ABSTRACTS OF JAPAN vol. 018, no. 672 (E-1646), 19 December 1994 & JP 06 267574 A (ISHIKAWAJIMA HARIMA HEAVY IND CO LTD), 22 September 1994,

## Beschreibung

Die Erfindung bezieht sich auf ein Verfahren zum Betreiben einer Hochtemperatur-Brennstoffzellenanlage und eine Hochtemperatur-Brennstoffzellenanlage.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch die elektrochemische Verbindung von Wasserstoff (H₂) und Sauerstoff (O₂) zu Wasser entsteht elektrischer Strom mit hohem Wirkungsgrad. Wenn als Brenngas reiner Wasserstoff (H₂) eingesetzt wird, geschieht dies ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten.

Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Ein Hochtemperatur-Brennstoffzellenblock (in der Fachliteratur wird ein Brennstoffzellenblock auch "Stack" genannt) setzt sich in der Regel aus einer Vielzahl von planar aufgebauten und aufeinander gestapelten Hochtemperatur-Brennstoffzellen zusammen. Brennstoffzellenanlagen, die wenigstens einen Hochtemperatur-Brennstoffzellenblock umfassen, sind beispielsweise aus den deutschen Patentanmeldungen mit den amtlichen Kennzeichen 195 23 973.3, 195 23 972.5 und 195 14 469.4 bekannt.

Eine Hochtemperatur-Brennstoffzellenanlage wird mit einer hohen, konstanten Betriebstemperatur von beispielsweise über 900 °C betrieben. Dazu muß dieser zum Erreichen der Betriebstemperatur vor dem Betrieb oder zum Halten der notwendigen Betriebstemperatur während kurzer Betriebspausen zusätzlich Wärme zugeführt werden.

Ein weiteres Problem ist die effiziente Nutzung der Betriebsmittel beim Betrieb des Hochtemperatur-Brennstoffzellenblocks. Um den Hochtemperatur-Brennstoffzellenblock mit einem hohen Wirkungsgrad betreiben zu können, müssen die Betriebsmittel im Überfluß zugeführt werden. Nur durch einen Überschuß an Betriebsmitteln kann gewährleistet werden, daß die aktiven Flächen der Hochtemperatur-Brennstoffzellen ausreichend mit Betriebsmitteln versorgt werden. Durch diesen Überschußbetrieb des Hochtemperatur-Brennstoffzellenblocks mit Betriebsmitteln ergibt sich zwangsläufig, daß nach erfolgter elektrochemischer Reaktion immer noch Betriebsmittel im Abgas am Ausgang des Hochtemperatur-Brennstoffzellenblocks vorhanden sind. Das heißt mit anderen Worten, daß die Betriebsmittel nicht vollständig im Hochtemperatur-Brennstoffzellenblock verbraucht werden. Sie werden teilweise ungenutzt abgegeben, was die Effizienz beeinträchtigt.

Aus der deutschen Offenlegungsschrift 41 37 968 ist eine Wärmeaustauschvorrichtung bekannt, bei der das Abgas eines Hochtemperatur-Brennstoffzellenblocks einer Entspannungsturbine zugeführt wird. Das Abgas des Hochtemperatur-Brennstoffzellenblocks enthält dabei nicht verbrauchte Luft aus dem Kathodenabgas und nicht verbrauchten Wasserstoff aus dem Anodenabgas. Zum Erwärmen des Abgases auf die Eingangstemperatur der Entspannungsturbine wird das Abgas vor dem Einspeisen durch einen im Hochtemperatur-Brennstoffzellenblock integrierten Wärmetauscher geführt. Nach dem Einspeisen in die Turbine wird das Abgas in derselbigen entspannt. D.h. daß nur der Wärmeinhalt des Abgases zum Erzeugen von Energie in der Turbine verwendet wird, nicht aber die Komponenten des Abgases selbst, wie zum Beispiel der Wasserstoff.

Der Erfindung liegt die Aufgabe zugrunde, ein Verfahren zum Betreiben einer Hochtemperatur-Brennstoffzellenanlage anzugeben, bei dem eine effiziente und flexible Energieerzeugung gewährleistet wird. Außerdem soll eine Hochtemperatur-Brennstoffzellenanlage mit einem hohen Wirkungsgrad angegeben werden.

Die erstgenannte Aufgabe wird gemäß der Erfindung gelöst durch ein Verfahren zum Betreiben einer Hochtemperatur-Brennstoffzellenanlage, die wenigstens einen Hochtemperatur-Brennstoffzellenblock mit einem Anodenteil und einem Kathodenteil umfaßt. Zur Erhöhung der Energieerzeugung ist ein an einen Generator gekoppelter Gasmotor vorgesehen, dem wenigstens ein Anteil des Anodenabgases des Hochtemperatur-Brennstoffzellenblocks als Betriebsmittel zugeführt wird.

Dieses Verfahren erweist sich als effizient, da das gesamte Betriebsmittel, soweit es nicht im Brennstoffzellenblock verbraucht und daher im Anodenabgas noch vorhanden ist, dem Gasmotor als Betriebsmittel zur weiteren Energiegewinnung zur Verfügung steht. Zugleich erweist sich das Verfahren als flexibel, da es nicht notwendig ist, dem Gasmotor zu jedem Betriebszeitpunkt immer die gleiche Menge an Betriebsmittel aus dem Anodenabgas zur Verfügung zu stellen. Ist zu einem bestimmten Betriebszeitpunkt nicht ausreichend Betriebsmittel im Anodenabgas zum Betreiben des Gasmotors vorhanden, so kann der fehlende Anteil an Betriebsmittel dem Gasmotor gesondert zugeführt werden.

Vorzugsweise wird dem Anodenabgas vor dem Einspeisen in den Gasmotor Wasser entzogen. Mit anderen Worten: Das bei der elektrochemischen Reaktion im Hochtemperatur-Brennstoffzellenblock entstehende Wasser wird dem Anodenabgas entzogen, so daß das Betriebsmittel für den Gasmotor in einer für diesen verwertbaren Form vorliegt. Mit dem Wasser wird dem Anodenabgas auch ein Teil seines Wärmeinhaltes entzogen. Die Temperatur des Anodenabgases, d.h. des Betriebsmittels für den Gasmotor, wird somit auf dem Weg vom Hochtemperatur-Brennstoffzellenblock zum Gasmotor abgesenkt.

Insbesondere kann einem Betriebsmittel für den Anodenteil vor dem Einspeisen Wasser in Form von Wasserdampf zugeführt werden.

In einer weiteren Ausgestaltung wird ein Anteil des mit dem Generator erzeugten elektrischen Stromes zum Aufwärmen eines Betriebsmittels beim Anfahren des Hochtemperatur-Brennstoffzellenblocks verwendet. Z.B. kann das im Normalbetrieb für den Hochtemperatur-Brennstoffzellenblock vorgesehene Betriebsmittel beim Start über einen Bypaß direkt dem Gasmotor zugeführt werden, dessen Energie somit zur elektrischen Aufheizung des Hochtemperatur-Brennstoffzellenblocks verwendet wird. Demzufolge kann der Hochtemperatur-Brennstoffzellenblock mit dem Gasmotor, der ein Teil der gesamten Hochtemperatur-Brennstoffzellenanlage ist, angefahren werden.

Insbesondere kann mit der Abwärme des Gasmotors ein Betriebsmittel für den Anodenteil und/oder Kathodenteil des Hochtemperatur-Brennstoffzellenblocks erwärmt werden.

Die zweitgenannte Aufgabe wird gemäß der Erfindung gelöst durch eine Hochtemperatur-Brennstoffzellenanlage mit wenigstens einem Hochtemperatur-Brennstoffzellenblock, der einen Anodenteil und einen Kathodenteil umfaßt. Zur Erhöhung der Energieerzeugung ist ein an einen Generator gekoppelter Gasmotor vorgesehen, wobei der Gasmotor am Abweg des Anodenteils des Hochtemperatur-Brennstoffzellenblocks angeschlossen ist.

Vorzugsweise ist wenigstens ein Wasserabscheider im Abweg des Anodenteils vorgesehen. Das aus dem Anodenabgas mit mindestens einem Wasserabscheider entzogene Wasser kann zum Beispiel über eine Speisewasservorlage einem Dampferzeuger zugeführt werden, wobei das anschließend verdampfte Wasser wieder dem Betriebsmittel für den Anodenteil des Hochtemperatur-Brennstoffzellenblocks zugeführt wird. Dadurch kann auch das Wasser aus dem Anodenabgas einer Wiederverwendung in dem Hochtemperatur-Brennstoffzellenblock zugeführt werden.

Insbesondere kann wenigstens ein Wärmetauscher in der Ableitung des Gasmotors angeordnet sein.

In einer weiteren Ausgestaltung ist ein Dampferzeuger in der Ableitung des Gasmotors vorgesehen. Mit dem Dampferzeuger wird das Wasser aus dem Abgas des Anodenteils des Hochtemperatur-Brennstoffzellenblocks für eine Wiederverwendung im Kathodenteil verdampft.

Vorzugsweise ist der Generator an eine im Zuweg des Kathodenteils angeordnete Heizeinrichtung angeschlossen. Ein Anteil des im Generator erzeugten elektrischen Stromes wird zum Erwärmen des Betriebsmittels für den Kathodenteil verwendet.

Insbesondere kann der Generator zum Einspeisen des elektrischen Stromes an ein Stromnetz angeschlossen sein. Der Strom kann über das Stromnetz einem Verbraucher zugeführt werden.

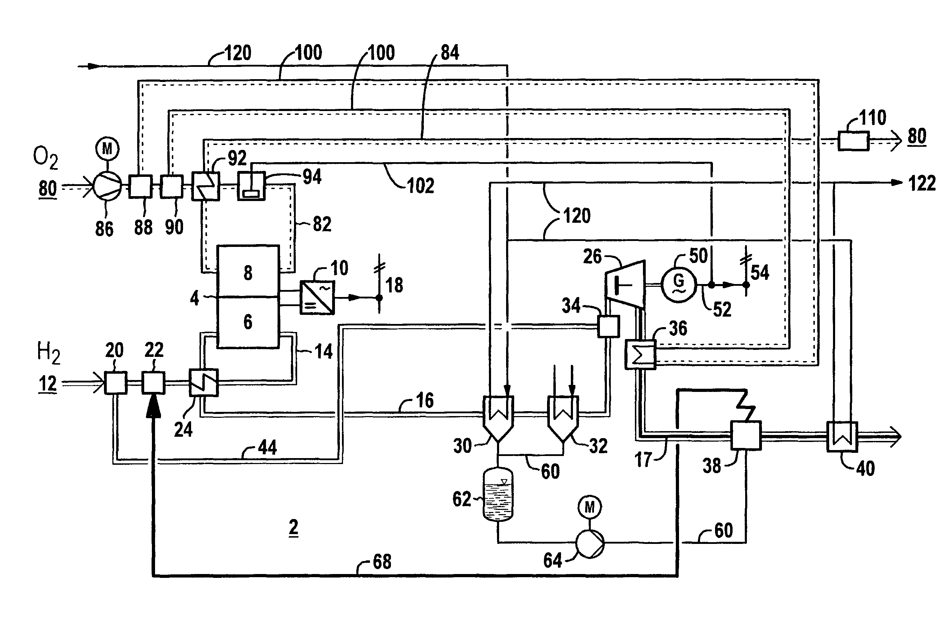

Zur weiteren Erläuterung der Erfindung wird auf das Ausführungsbeispiel der Zeichnung verwiesen, in deren einziger Figur eine Hochtemperatur-Brennstoffzellenanlage schematisch dargestellt ist.

Gemäß der Figur umfaßt eine Hochtemperatur-Brennstoffzellenanlage 2 einen Hochtemperatur-Brennstoffzellenblock 4, der in einen Anodenteil 6 mit nicht näher dargestellten Anodengasräumen und einen Kathodenteil 8 mit nicht weiter dargestellten Kathodengasräumen aufgeteilt ist. Der Hochtemperatur-Brennstoffzellenblock 4 ist vorzugsweise aus einer Vielzahl von planar aufgebauten, nicht weiter dargestellten Hochtemperatur-Brennstoffzellen zusammengesetzt.

An dem Hochtemperatur-Brennstoffzellenblock 4 ist ein Wechselrichter 10 angeschlossen, der den von dem Hochtemperatur-Brennstoffzellenblock 4 erzeugten Gleichstrom in Wechselstrom für ein Stromnetz 18 umwandelt.

Dem Anodenteil 6 ist ein Anodenweg 12 für dessen Versorgung mit einem Betriebsmittel, beispielsweise Wasserstoff (H₂) oder einem Gemisch aus Brenngas und Reaktionsdampf, zugeordnet, der einen Zuweg 14 und einen Abweg 16 umfaßt. Das Betriebsmittel wird vor dem Einspeisen in den Anodenteil 6 als "Betriebsmittel für den Anodenteil 6" und nach dem Verlassen des Anodenteils 6 als "Anodenabgas des Anodenteils 6" bezeichnet.

In den Zuweg 14 des Anodenteils 6 des Hochtemperatur-Brennstoffzellenblocks 4 sind in Strömungsrichtung der Reihenfolge nach ein Gasteiler 20, eine Mischkammer 22 und ein Wärmetauscher 24 angeordnet. An den Abweg 16 des Anodenteils 6 des Hochtemperatur-Brennstoffzellenblocks 4 ist ein Gasmotor 26 angeschlossen. Unter dem Begriff "Gasmotor" wird hier eine Vorrichtung zum Umwandeln der im Betriebsmittel (Anodenabgas) enthaltenen chemischen Energie in mechanische Energie verstanden. An den Gasmotor 26 ist ein Generator 50 gekoppelt, der die im Gasmotors 26 erzeugte mechanische Energie in Wechselstrom umwandelt. Der Wechselstrom wird über eine Leitung 52 an ein Stromnetz 54 abgegeben.

Das Abgas des Gasmotors 26 wird über eine Ableitung 17 aus der Hochtemperatur-Brennstoffzellenanlage 2 abgeleitet. In der Ableitung 17 sind in Strömungsrichtung der Reihenfolge nach ein Wärmetauscher 36, ein Dampferzeuger 38 und ein weiterer Wärmetauscher 40 angeordnet.

Im Abweg 16 des Anodenteils 6 sind in Strömungsrichtung der Reihenfolge nach zwei Wasserabscheider 30, 32 und eine Mischkammer 34 angeordnet.

Das Betriebsmittel für den Anodenteil 6 wird über den Zuweg 14 in den Anodenteil 6 des Hochtemperatur-Brennstoffzellenblocks 4 eingespeist. Dabei durchströmt das Betriebsmittel zunächst den Gasteiler 20, in dem ein Teil des Betriebsmittels aus dem Zuweg 14 über eine Leitung 44 abgezweigt und direkt in die Mischkammer 34 eingespeist wird, die vor dem Gasmotor 26 in dem Abweg 16 des Anodenteils 6 angeordnet ist. Damit ist ein Betrieb des Gasmotors 26 auch dann gewährleistet, wenn nicht ausreichend Betriebsmittel in dem Anodenabgas des Anodenteils 6 des Hochtemperatur-Brennstoffzellenblocks 4 vorhanden ist. Im Wärmetauscher 24 wird das Betriebsmittel für den Anodenteil 6 durch das Anodenabgas erwärmt.

Nach erfolgter elektrochemischer Reaktion im Hochtemperatur-Brennstoffzellenblock 4 wird das Anodenabgas über den Abweg 16 aus dem Hochtemperatur-Brennstoffzellenblock 4 abgeführt. In den Wasserabscheidern 30 und 32 werden ein Großteil des bei der Reaktion im Hochtemperatur-Brennstoffzellenblock 4 entstehenden Prozeßwassers sowie ein Anteil des Wärmeinhaltes des Anodenabgases entfernt.

Nach Entfernung des Prozeßwassers aus dem Anodenabgas gelangt das abgekühlte Anodenabgas als Betriebsmittel über die Mischkammer 34 in den Gasmotor 26. Hier wird das Betriebsmittel, d.h. das Anodenabgas, unter Erzeugung von mechanischer Energie verbrannt.

Im Dampferzeuger 38 wird das Prozeßwasser, welches durch die Wasserabscheider 30, 32 aus dem Anodenabgas entfernt wurde, verdampft. Dazu wird das Prozeßwasser aus den Wasserabscheidern 30, 32 über eine Leitung 60, in der eine Speisewasservorlage 62 und eine Pumpe 64 angeordnet sind, dem Dampferzeuger 38 zugeführt. Die Speisewasservorlage 62 dient dabei als Reservoir für das Prozeßwasser. Dieses wird im gewünschten Maße durch die Pumpe 64 dem Dampferzeuger 38 zugeführt.

Der in dem Dampferzeuger 38 erzeugte Wasserdampf wird über eine Leitung 68 der Mischkammer 22, welche in dem Zuweg 14 für den Anodenteil 6 angeordnet ist, zugeführt. Der Wasserdampf wird somit dem Betriebsmittel für den Anodenteil 6 zu dessen Erwärmung beigemischt.

Die in dem Wasserabscheider 30 und in dem weiteren Wärmetauscher 40 anfallenden Wärme kann über eine ein Wärmeträgermedium führende Leitung 120 in ein nicht näher dargestelltes Nahwärmewassernetz 122 eingespeist werden.

Dem Kathodenteil 8 des Hochtemperatur-Brennstoffzellenblocks 4 ist ein Kathodenweg 80 zugeordnet, der einen Zuweg 82 und einen Abweg 84 umfaßt. Im Zuweg 82 für den Kathodenteil 8 sind in Strömungsrichtung der Reihenfolge nach ein Verdichter 86, ein Gasteiler 88, eine Mischkammer 90, ein Wärmetauscher 92 und eine elektrische Heizeinrichtung 94 angeordnet.

Das Betriebsmittel für den Kathodenteil 8 wird über den Zuweg 82 dem Kathodenteil 8 zugeführt. Dabei wird das Betriebsmittel, beispielsweise Luft oder mit Sauerstoff (O₂) angereicherte Luft, über den Verdichter 86 in den Gasteiler 88 eingespeist.

Im Gasteiler 88 wird zumindest ein Teil des Betriebsmittels für den Kathodenteil 8 aus dem Zuweg 82 für den Kathodenteil 8 abgezweigt und über eine Leitung 100 durch den Wärmetauscher 36 geführt. Er wird anschließend über die Mischkammer 90 dem Zuweg 82 wieder zugeführt. Da der Wärmetauscher 36 hinter dem Gasmotor 26 in die Ableitung 17 für das Abgas des Gasmotors 26 geschaltet ist, wird das aus dem Zuweg 82 abgezweigte Betriebsmittel für den Kathodenteil 8 durch das Abgas des Gasmotors 26 erwärmt. Somit wird die Abwärme des Abgases des Gasmotors 26 vorteilhafterweise für die Erwärmung des Betriebsmittels für den Kathodenteil 8 genutzt.

Der nicht abgezweigte Anteil des Betriebsmittels gelangt direkt über die Zuleitung 82 in die Mischkammer 90, wo er wieder mit dem abgezweigten Anteil zusammengeführt wird. Anschließend wird das Betriebsmittel für den Kathodenteil 8 in dem Wärmetauschern 92 und in der elektrischen Heizeinrichtung 94 erwärmt. In dem Wärmetauscher 92 wird das Betriebsmittel für den Kathodenteil 8 durch das Kathodenabgas erwärmt, und in der elektrischen Heizeinrichtung 94 wird es zum Anfahren des Hochtemperatur-Brennstoffzellenblocks 4 elektrisch erwärmt. Dabei wird die elektrische Heizeinrichtung 94 aus dem Generator 50, der dem Gasmotor 26 zugeordnet ist, mit Strom gespeist. Die Stromversorgung der elektrischen Heizeinrichtung 94 erfolgt dabei über eine Leitung 102 aus der Leitung 52.

Das Kathodenabgas wird über den Abweg 84 des Kathodenteils 8 zunächst durch den Wärmetauscher 92 geführt, wo es das Betriebsmittel für den Kathodenteil 8 erwärmt. Anschließend wird es einer nicht näher dargestellten Nahwärmenutzung 110 zugeführt.

Somit wird einerseits mit dem Anodenabgas des Hochtemperatur-Brennstoffzellenblocks 4 der Gasmotor 26 betrieben, und andererseits wird der Gasmotor 26 zum Anfahren des Hochtemperatur-Brennstoffzellenblocks 4 verwendet. Das in der elektrochemischen Reaktion im Hochtemperatur-Brennstoffzellenblock 4 anfallende Prozeßwasser wird in Form von Wasserdampf dem Betriebsmittel für den Anodenteil 6 zur Erwärmung zugeführt. Des weiteren wird mit dem durch Gasmotor 26 und Generator 50 erzeugten Strom die elektrische Heizeinrichtung 94 für die Erwärmung des Betriebsmittels für den Kathodenteil 8 des Hochtemperatur-Brennstoffzellenblocks 4 betrieben. Außerdem wird durch die Wärme des Abgases des Gasmotors 26 das Betriebsmittel für den Kathodenteil 8 des Hochtemperatur-Brennstoffzellenblocks 4 vorgewärmt.

Somit kann der Anfahrprozeß der Hochtemperatur-Brennstoffzellenanlage 2 allein durch Komponenten, die in der Hochtemperatur-Brennstoffzellenanlage 2 vorgesehen sind, durchgeführt werden.

## Patentansprüche

1. Verfahren zum Betreiben einer Hochtemperatur-Brennstoffzellenanlage (2), die wenigstens einen Hochtemperatur-Brennstoffzellenblock (4) mit einem Anodenteil (6) und einem Kathodenteil (8) umfaßt, wobei zur Erhöhung der Energieerzeugung einem an einen Generator (50) gekoppelten Gasmotor (26) wenigstens ein Anteil des Anodenabgases des Hochtemperatur-Brennstoffzellenblocks (4) als Betriebsmittel zugeführt wird, und dem Anodenabgas vor dem Einspeisen in den Gasmotor (26) Wasser und Wärmeenergie entzogen wird.

2. Verfahren nach Anspruch 1, **dadurch gekennzeichnet, daß** der Anodenteil (6) mit einem Betriebsmittel gespeist wird, dem vor dem Einspeisen Wasser in Form von Wasserdampf zugeführt wird.

3. Verfahren nach Anspruch 1 oder 2,
**dadurch gekennzeichnet, daß** ein Anteil des mit dem Generator (50) erzeugten elektrischen Stromes zum Aufwärmen eines Betriebsmittels beim Anfahren des Hochtemperatur-Brennstoffzellenblocks (4) verwendet wird.

4. Verfahren nach einem der Ansprüche 1 bis 3,
**dadurch gekennzeichnet, daß** mit der Abwärme des Gasmotors (26) ein Betriebsmittel für den Anoden(6) und/oder Kathodenteil (8) des Hochtemperatur-Brennstoffzellenblocks (4) erwärmt wird.

5. Hochtemperatur-Brennstoffzellenanlage (2) mit wenigstens einem Hochtemperatur-Brennstoffzellenblock (4), der einen Anodenteil (6) und einen Kathodenteil (8) sowie einen zur Energieerzeugung an einen Generator (50) gekoppelten Gasmotor (26) umfaßt, wobei der Gasmotor (26) am Abweg (16) des Anodenteils (6) des Hochtemperatur-Brennstoffzellenblocks (4) angeschlossen ist, und wenigstens ein Wasserabscheider (30, 32) im Abweg (16) des Anodenteils (6) angeordnet ist.

6. Hochtemperatur-Brennstoffzellenanlage (2) nach Anspruch 5, **gekennzeichnet durch** wenigstens einen Wärmetauscher (36, 40) in der Ableitung (17) des Gasmotors (26).

7. Hochtemperatur-Brennstoffzellenanlage (2) nach Anspruch 6, **gekennzeichnet durch** einen Dampferzeuger (38) in der Ableitung (17) des Gasmotors (26).

8. Hochtemperatur-Brennstoffzellenanlage (2) nach Anspruch 6 oder 7, **dadurch gekennzeichnet, daß** an dem Generator (50) an eine im Zuweg (82) des Kathodenteils (8) angeordnete elektrische Heizeinrichtung (94) angeschlossen ist.

9. Hochtemperatur-Brennstoffzellenanlage (2) nach einem der Ansprüche 5 bis 8, **dadurch gekennzeichnet, daß** der Generator (50) zum Einspeisen des elektrischen Stromes an ein Stromnetz (54) angeschlossen ist.

## Claims

1. Process for operating a high temperature fuel cell installation (2) comprising at least one high temperature fuel cell block (4) with an anode part (6) and a cathode part (8), at least a portion of the anode off-gas from the high temperature fuel cell block (4) being fed as working medium to a gas motor (26) coupled to a generator (50) in order to increase the energy production, and water and heat energy are withdrawn from the anode off-gas before feeding into the gas motor (26).

2. Process according to Claim 1, **characterized in that** the anode part (6) is supplied with a working medium whch is supplied with water in the form of water vapour before the feeding.

3. Process according to Claim 1 or 2, **characterized in that** a portion of the electric current produced with the generator (50) is used to heat a working medium when the high temperature fuel cell block (4) is being started up.

4. Process according to one of Claims 1 to 3, **characterized in that** a working medium for the anode part (6) and/or cathode part (8) of the high temperature fuel cell block (4) is heated with the heat dissipated by the gas motor (26).

5. High temperature fuel cell installation (2) having at least one high temperature fuel cell block (4) comprising an anode part (6) and a cathode part (8) as well as a gas motor (26) coupled to a generator (50) in order to produce energy, the gas motor (26) being connected to the discharge path (16) of the anode part (6) of the high temperature fuel cell block (4), and at least one water precipitator (30, 32) is arranged in the discharge path (16) of the anode part (6).

6. High temperature fuel cell installation (2) according to Claim 5, **characterized by** at least one heat exchanger (36, 40) in the discharge line (17) of the gas motor (26).

7. High temperature fuel cell installation (2) according to Claim 6, **characterized by** a steam generator (38) in the discharge line (17) of the gas motor (26).

8. High temperature fuel cell installation (2) according to Claim 6 or 7, **characterized in that** the generator (50) is connected to an electrical heating device (94) arranged in the feed path (82) of the cathode part (8).

9. High temperature fuel cell installation (2) according to one of Claims 5 to 8, **characterized in that** the generator (50) is connected to an electrical network (54) in order to feed it with electric current.

## Revendications

1. Procédé pour faire fonctionner une installation (2) de pile à combustible à haute température, qui comprend au moins un bloc (4) de piles à combustible à haute température ayant une partie (6) d'anode et une partie (8) de cathode, une partie de l'effluent gazeux de l'anode du bloc (4) de piles à combustible à haute température étant envoyée en tant que fluide de fonctionnement en vue d'augmenter la production d'énergie à un moteur (26) à gaz couplé à une génératrice (50) et de l'eau et de l'énergie calorifique étant soutirées de l'effluent gazeux anodique avant l'injection dans le moteur (26) à gaz.

2. Procédé suivant la revendication 1, **caractérisé en ce que** la partie (6) d'anode est alimentée en un fluide de fonctionnement auquel est envoyé avant l'injection de l'eau sous forme de vapeur d'eau.

3. Procédé suivant la revendication 1 ou 2, **caractérisé en ce qu'**une certaine proportion du courant électrique produit par la génératrice (50) est utilisée pour réchauffer un fluide de fonctionnement lors du démarrage du bloc (4) de piles à combustible à haute température.

4. Procédé suivant l'une des revendications 1 à 4, **caractérisé en ce qu'**un fluide de fonctionnement pour la partie (6) d'anode et/ou pour la partie (8) de cathode du bloc (4) de piles à combustible à haute température est réchauffé par la chaleur perdue du moteur (26) à gaz.

5. Installation (2) de piles à combustible à haute température, comprenant au moins un bloc (4) de piles à combustible à haute température, qui comprend une partie (6) d'anode et une partie (8) de cathode ainsi qu'un moteur (26) à gaz couplé pour la production d'énergie à une génératrice (50), le moteur (26) à gaz étant raccordé à une voie (16) d'évacuation de la partie (6) d'anode du bloc (4) de piles à combustible à haute température et au moins un séparateur (30, 32) d'eau étant monté dans la voie (16) d'évacuation de la partie (6) d'anode.

6. Installation (2) de pile à combustible à haute température suivant la revendication 5, **caractérisé par** au moins un échangeur (36, 40) dans le conduit (17) d'échappement du moteur (26) à gaz.

7. Installation (2) de pile à combustible à haute température suivant la revendication 6, **caractérisé par** un générateur (38) de vapeur dans le conduit (17) d'échappement du moteur (26) à gaz.

8. Installation (2) de pile à combustible à haute température suivant la revendication 6 ou 7, **caractérisé en ce qu'**à la génératrice (50) est raccordé un dispositif (94) électrique de chauffage monté dans la voie (82) d'admission de la partie (8) de cathode.

9. Installation (2) de pile à combustible à haute température suivant l'une des revendications 5 à 8, **caractérisé en ce que** la génératrice (50) est raccordée à un réseau (54) de courant électrique pour l'alimentation en courant électrique.
